# EUROPEAN PATENT SPECIFICATION

(11) **EP 4 470 815 B1**
(45) Date of publication and mention of the grant of the patent: **16.09.2026**
(21) Application number: 23746824.4
(22) Date of filing: 19.01.2023
(51) Int. Cl.: B60L 3/00, B60K 6/26, B60K 6/40, B60L 15/00, B60L 15/20, H02K 9/19, H02P 29/64

(54) **VEHICULAR DRIVE DEVICE**
FAHRZEUGANTRIEBSVORRICHTUNG
DISPOSITIF D'ENTRAÎNEMENT DE VÉHICULE

(30) Priority: 27.01.2022 JP 2022011170
(43) Date of publication of application: 04.12.2024
(73) Proprietor: AISIN CORPORATION, Kariya-shi, Aichi 448-8650 (JP)
(72) Inventor: IMADATE, Hiroyoshi, Kariya-shi, Aichi 448-8650 (JP); KODERA, Yoshihiro, Echizen-shi, Fukui 915-8520 (JP); UMENO, Kazuki, Kariya-shi, Aichi 448-8650 (JP)
(74) Representative: TBK
(86) International application number: PCT/JP2023/001569
(87) International publication number: WO 2023/145611

(56) References cited:
- JP-A- 2012 100 492
- JP-A- 2013 040 783
- JP-A- 2014 133 553
- JP-A- 2019 111 956
- US-A1- 2017 131 158
- US-B2- 7 322 903
- US-B2- 9 091 600
- US-B2- 9 541 457

## Description

### TECHNICAL FIELD

The present disclosure relates to vehicle drive devices.

### BACKGROUND ART

A technique is known in which a rotating electrical machine is disposed radially outward of a power transmission mechanism in a case (see, for example, Patent Document 1).

### Related Art Documents

### Patent Documents

Patent Document 1: Japanese Unexamined Patent Application Publication No. 2021-151010 (JP 2021-151010 A)

US 9 541 457 A discloses a power transmission mechanism according to the preamble of claim 1. Further power transmission mechanisms are known from US 7 322 903 B2, US 2017/131158 A1 and US 9 091 600 B2.

### SUMMARY OF THE INVENTION

### Problem to be Solved by the Invention

Oil supplied to the power transmission mechanism is warmed due to loss in the power transmission mechanism. Therefore, in a configuration in which a rotating electrical machine is disposed radially outward of the power transmission mechanism, the oil warmed in the power transmission mechanism may hit a stator coil of the rotating electrical machine. Therefore, in such related art as described above, it is difficult to accurately calculate the temperature of the stator coil in the configuration in which the rotating electrical machine is disposed radially outward of the power transmission mechanism.

It is the object of the invention to accurately calculate the temperature of a stator coil in a configuration in which a rotating electrical machine is disposed radially outward of a power transmission mechanism.

### Means for Solving the Problem

The object of the invention is achieved with a power transmission mechanism according to claim 1. Further advantageous developments of the invention are subject-matter of the dependent claims.

### Effects of the Invention

According to the present invention, it is possible to accurately calculate the temperature of the stator coil in the configuration in which the rotating electrical machine is disposed radially outward of the power transmission mechanism.

### BRIEF DESCRIPTION OF THE DRAWINGS

[FIG. 1] FIG. 1 is a skeleton diagram showing an entire drive system including a hybrid drive device according to an embodiment.
[FIG. 2] FIG. 2 is a sectional view showing part of the hybrid drive device according to the embodiment.
[FIG. 3] FIG. 3 is a block diagram showing an example of a processing device that implements a coil temperature calculation function.
[FIG. 4] FIG. 4 is an illustration of a map that is used by a correction temperature calculation unit.
[FIG. 5] FIG. 5 is a block diagram showing an example of a processing device that implements a coil temperature calculation function according to a first modification.
[FIG. 6] FIG. 6 is a block diagram showing an example of a processing device that implements a coil temperature calculation function according to a second modification.

### MODES FOR CARRYING OUT THE INVENTION

Embodiments will be described in detail below with reference to the accompanying drawings. The dimensional ratios in the drawings are merely illustrative, and are not limited to these. The shapes etc. in the drawings may be partially exaggerated for convenience of description.

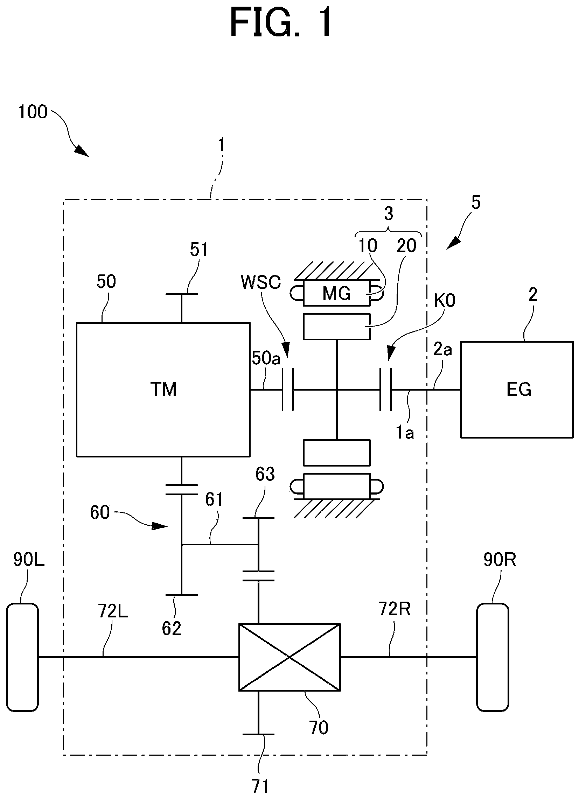

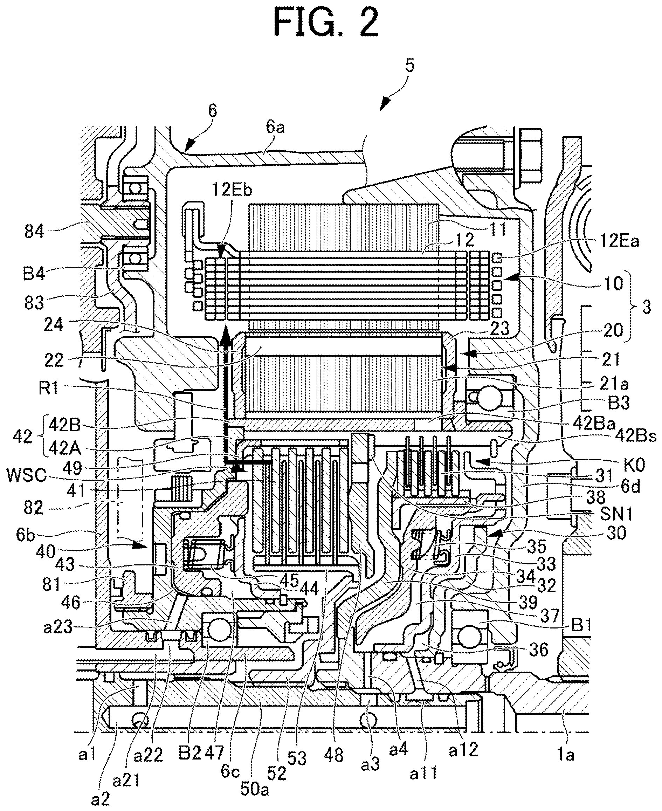

A hybrid drive device according to an embodiment will be described below with reference to FIGS. 1 and 2. The hybrid drive device according to the present embodiment is suitable for being mounted on a vehicle such as a front engine, front drive (FF) vehicle, and the left-right direction in FIGS. 1 and 2 corresponds to the left-right direction (or opposite direction) in the state where the hybrid drive device is actually mounted on the vehicle. For convenience of description, however, the right side in the figures that is the side on which a driving source such as an engine is located is referred to as the "front side," and the left side in the figures is referred to as the "rear side."

### [General Configuration of Hybrid Drive Device]

As shown in FIG. 1, a vehicle 100 includes as a driving source a rotating electrical machine (motor generator) 3 (MG) in addition to an engine 2 (EG). A hybrid drive device 1 as a vehicle drive device constituting a powertrain of the vehicle 100 is disposed between the engine 2 and left and right drive shafts 72L, 72R drivingly connected to left and right wheels 90L, 90R in a power transmission path. In the power transmission path, the hybrid drive device 1 includes, in order from the engine 2 side, an input unit 5 to which power from the engine 2 is input, a speed change mechanism 50 (TM) that changes the speed of rotation from the input unit 5, a countershaft 60 that reverses rotation of the speed change mechanism 50, and a differential 70 that transmits rotation of the countershaft 60 to the wheels 90L, 90R via the drive shafts 72L, 72R while absorbing the difference in rotation between the left and right wheels 90L, 90R.

An output shaft (crankshaft) 2a of the engine 2 is drivingly connected to an input shaft 1a of the hybrid drive device 1, and the input shaft 1a serves as an input member of the engine 2 to the input unit 5. Although not shown in the figure, a damper device that reduces pulsation of the engine 2 is interposed between the input shaft 1a and a clutch K0 in the power transmission path.

The input unit 5 includes the clutch K0 as a first clutch, the rotating electrical machine (hereinafter simply referred to as "motor") 3, and a clutch WSC as a second clutch. The clutch K0 is interposed between the engine 2 and the motor 3 in the power transmission path. When the clutch K0 is engaged, the engine 2 is drivingly connected to the motor 3. When the clutch K0 is disengaged, the engine 2 is disconnected from the motor 3. In other words, the clutch K0 is configured as an engine disconnection clutch that releases driving connection of the engine 2 from the hybrid drive device 1. The clutch K0 is engaged when the driving force of the engine 2 is used, and is disengaged when the driving force of the motor 3 is used without using the driving force of the engine 2. In other words, the clutch K0 has a function as a drive pattern switching clutch that switches the pattern in which the driving force of the driving source is output.

The motor 3 includes a stator 10 (fixed part) and a rotor 20 (rotating part). The rotor 20 is drivingly connected to the clutch K0, and is also drivingly connected to the clutch WSC. The clutch WSC is interposed between the rotor 20 of the motor 3 and an input shaft 50a as an input member of the speed change mechanism 50 in the power transmission path. The clutch WSC is configured to transmit the driving force of either or both of the engine 2 and the motor 3 to the speed change mechanism 50 when engaged, and not to transmit the driving force of either or both of the engine 2 and the motor 3 to the speed change mechanism 50 when disengaged. The clutch WSC has a function as a starting clutch that, when the vehicle 100 comes to a stop, is disengaged so that the engine 2 does not stop even though the wheels 90L, 90R stop rotating, and when the vehicle 100 starts moving, is slip-engaged to cause the vehicle 100 to start moving, particularly during so-called engine driving in which the vehicle 100 is driven using the driving force of the engine 2 (including hybrid driving in which the engine 2 has been started and is assisted or regenerated by the motor 3). During so-called EV driving in which the vehicle 100 is driven using the driving force of the motor 3, the clutch K0 is disengaged, and therefore the clutch WSC is engaged.

The input unit 5 configured as described above has a function as a drive pattern switching unit that switches the pattern in which the driving force of the driving source is output, and also has a function as a starting device that, in place of a fluid transmission apparatus such as a torque converter, causes the vehicle to start moving.

The speed change mechanism 50 has a function to change the speed ratio between the rotation from the input unit 5 (rotation of the driving source) and rotation of the wheels 90L, 90R. That is, the rotation input to the input shaft 50a is changed in speed by a gear mechanism etc., not shown, and output from a counter gear 51. The speed change mechanism 50 may be a stepped speed change mechanism having a gear mechanism composed of a combination of a plurality of planetary gears etc., a belt or toroidal type continuously variable speed change mechanism, or a combination of a stepped gear and a continuously variable speed change mechanism.

The countershaft 60 includes a drive shaft 61, and a large diameter gear 62 and a small diameter gear 63 that are fixed to the drive shaft 61. The large diameter gear 62 meshes with the counter gear 51 of the speed change mechanism 50. The rotation input from the counter gear 51 to the large diameter gear 62 is output to the small diameter gear 63 via the drive shaft 61. The differential 70 includes a differential ring gear 71 that meshes with the small diameter gear 63. The rotation input from the small diameter gear 63 to the differential ring gear 71 is output to the left and right drive shafts 72L, 72R via a differential gear mechanism, not shown, and is then output to the left and right wheels 90L, 90R. Driving rotation of either or both of the engine 2 and the motor 3 is thus changed in speed by the speed change mechanism 50 and output to the wheels 90L, 90R. In other words, rotation of the driving source is changed in speed according to the vehicle speed and a driving force request, so that the vehicle 100 can be efficiently driven.

### [Details of Input Unit]

Next, the structure of the input unit 5 that is part of the hybrid drive device 1 will be described in detail with reference to FIG. 2. As shown in FIG. 2, the input unit 5 of the hybrid drive device 1 is disposed in the space in a case 6 that is surrounded by a cylindrical portion 6a, a first partition wall portion 6d on the front side, and a second partition wall portion 6b on the rear side. The input shaft 1a of the hybrid drive device 1 is rotatably supported by the first partition wall portion 6d of the case 6 via a ball bearing B1, and the input shaft 50a of the speed change mechanism 50 is rotatably fitted in a hollow portion formed in the input shaft 1a. The input shaft 50a is rotatably supported by a boss portion 6c extending in the form of a boss from the second partition wall portion 6b. The input shaft 1a and the input shaft 50a form the central axis of the input unit 5. The clutch K0 and the clutch WSC are disposed next to each other in the axial direction on the outer peripheries of the input shaft 1a and the input shaft 50a, and the motor 3 is disposed on the outer peripheral side of the clutch K0 and clutch WSC.

An end plate 39 in the form of a hollow disc is fixed to the end on the rear side of the input shaft 1a, and a hub member 38 is secured to the end plate 39. Of a plurality of friction plates 31 of the clutch K0, inner friction plates are spline-engaged with the hub member 38, and one end plate 39 restricts axial movement of the friction plates 31 when the friction plates 31 are pressed together by a hydraulic servo 30 that will be described later.

The clutch K0 includes the plurality of friction plates 31 and the hydraulic servo 30 that performs engagement or disengagement of (engages or disengages) the friction plates 31. Of the plurality of friction plates 31, outer friction plates are spline-engaged with splines 42Bs formed in a cylindrical portion 42B of a rotor hub 42 that will be described later. The hydraulic servo 30 includes: a cylinder member 32 constituting a hydraulic cylinder; a piston member 33 disposed so as to be movable in the axial direction with respect to the cylinder member 32 and having its distal end disposed so as to face the friction plates 31; a cancel plate 34 positioned with respect to the end plate 39 (and the input shaft 1a) in the axial direction; and a return spring 35 disposed between the piston member 33 and the cancel plate 34. A hydraulic oil chamber 36 is formed between the cylinder member 32 and the piston member 33, and a cancel oil chamber 37 that cancels a centrifugal oil pressure in the hydraulic oil chamber 36 is formed between the piston member 33 and the cancel plate 34.

The rotor hub 42 includes a cylinder member 42A constituting a hydraulic cylinder of a hydraulic servo 40 that will be described later, and the cylindrical portion 42B secured to the cylinder member 42A. The rotor hub 42 is rotatably supported by the boss portion 6c of the case 6 via a ball bearing B2, and is rotatably supported by the first partition wall portion 6d of the case 6 via a ball bearing B3. Splines 42Bs are formed in the inner periphery of the cylindrical portion 42B, and a splined drum member 49 is spline-engaged with the splines 42Bs. Of a plurality of friction plates 41 of the clutch WSC, outer friction plates are spline-engaged with the inner periphery of the drum member 49. An end plate 48 is spline-engaged with a spline 42Bs of the cylindrical portion 42B between the friction plate 41 and the end plate 39, and a snap ring SN1 retains the end plate 48 so as not to allow the end plate 48 to move toward the front side in the axial direction.

The clutch WSC includes the plurality of friction plates 41 and the hydraulic servo 40 that performs engagement or disengagement of (engages or disengages) the friction plates 41. Of the plurality of friction plates 41, inner friction plates is spline-engaged with a hub member 53 secured to a connecting member 52 spline-engaged with the input shaft 50a. The hydraulic servo 40 includes: the cylinder member 42A constituting a hydraulic cylinder; a piston member 43 disposed so as to be movable in the axial direction with respect to the cylinder member 42A and having its distal end disposed so as to face the friction plates 41; a cancel plate 44 positioned with respect to the cylinder member 42A in the axial direction; and a return spring 45 disposed between the piston member 43 and the cancel plate 44. A hydraulic oil chamber 46 is formed between the cylinder member 42A and the piston member 43, and a cancel oil chamber 47 that cancels a centrifugal oil pressure in the hydraulic oil chamber 46 is formed between the piston member 43 and the cancel plate 44.

The rotor 20 of the motor 3 is fixedly disposed on the outer periphery of the cylindrical portion 42B of the rotor hub 42. The rotor 20 includes: a rotor core 21 formed by stacking steel laminations 21a in the axial direction; a magnet 22 inserted and fixed in a slot of the rotor core 21; and a first end plate 23 and a second end plate 24 that are disposed on both sides in the axial direction of the rotor core 21 so that the magnet 22 does not fall out of the slot of the rotor core 21. The cylindrical portion 42B has circumferential holes 42Ba formed at positions located on the outer peripheral side of the clutch K0 and overlapping the clutch K0 in the axial direction as viewed in the circumferential direction. An oil passage structure that guides cooling oil from the circumferential holes 42Ba will be described later.

The stator 10 is disposed on the outer peripheral side of the rotor 20 so as to face the rotor 20. The stator 10 includes a stator core 11 with a plurality of teeth, and a plurality of stator coils 12 wound so as to extend through slots between the teeth of the stator core 11. The plurality of stator coils 12 protrudes from both sides of the stator core 11 in the axial direction to form a first coil end 12Ea and a second coil end 12Eb.

A sprocket 81 is spline-engaged with the rear side of the rotor hub 42. A sprocket 83 spline-engaged with a drive shaft 84 of an oil pump (not shown) is disposed on another axis parallel to the rotor hub 42 (input shaft 50a) so as to be rotatably supported by the case 6 via a ball bearing B4, A chain 82 is wound around the sprocket 81 and the sprocket 83. Driving rotation of the rotor hub 42 is thus transmitted to the drive shaft 84 of the oil pump, and the oil pump (not shown) is driven with the rotor hub 42 (motor 3).

### [Details of Oil Pressure Supply]

Next, supply of oil pressures will be described in detail. The hydraulic oil pressure of the clutch K0 is supplied from a hydraulic control device, not shown, to an oil passage (not shown) in the boss portion 6c of the case 6, and is further guided to an oil passage a11 from an oil passage, not shown, in the input shaft 50a and supplied to the hydraulic oil chamber 36 through an oil passage a12 in the input shaft 1a. As a result, the piston member 33 is pushed and moved against the biasing force of the return spring 35 to press the friction plates 31 together, so that the clutch K0 is engaged. When the clutch K0 is engaged, the input shaft 1a, the end plate 39, and the hub member 38 are drivingly connected to the rotor hub 42. That is, the engine 2 and the motor 3 are drivingly connected as described above. When the hydraulic oil pressure in the hydraulic oil chamber 36 is reduced, the pressure applied to the friction plates 31 by the piston member 33 is released by the biasing force of the return spring 35, so that the clutch K0 is disengaged. As a result, the driving connection between the engine 2 and the motor 3 is released.

The hydraulic oil pressure of the clutch WSC is supplied from the hydraulic control device, not shown, to an oil passage a21 in the boss portion 6c of the case 6, is guided to an oil passage a22, and is supplied to the hydraulic oil chamber 46 through an oil passage a23 in the rotor hub 42. As a result, the piston member 43 is pushed and moved against the biasing force of the return spring 45 to press the friction plates 41 together, so that the clutch WSC is engaged. When the clutch WSC is engaged, the rotor hub 42 and the drum member 49 are drivingly connected to the hub member 53 and the connecting member 52. That is, as described above, the motor 3 (and the engine 2 when the clutch K0 is engaged) is drivingly connected to the input shaft 50a of the speed change mechanism 50. Particularly when the vehicle 100 starts moving, the axial position of the piston member 43 is controlled against the biasing force of the return spring 45 by the magnitude of the hydraulic oil pressure, causing the friction plates 41 to be slip-engaged. The driving force of either or both of the motor 3 and the engine 2 is thus gradually transmitted to the speed change mechanism 50, so that the vehicle 100 can smoothly start moving.

When the hydraulic oil pressure in the hydraulic oil chamber 46 is reduced, the pressure applied to the friction plates 41 by the piston member 43 is released by the biasing force of the return spring 45, so that the clutch WSC is disengaged. As a result, the driving connection between the motor 3 (and the engine 2 when the clutch K0 is engaged) and the input shaft 50a of the speed change mechanism 50 is released. Particularly when the clutch K0 is engaged, even when the vehicle 100 comes to a stop and rotation of the input shaft 50a stops, rotation of the input shaft 1a is not stopped by the disengagement of the clutch WSC. That is, the vehicle 100 is allowed to come to a stop without stopping the engine 2.

### [Cooling Oil Supply]

Next, supply of lubricating oil (cooling oil) will be described. Lubricating oil for the clutch WSC is supplied from the hydraulic control device, not shown, to an oil passage (not shown) in the boss portion 6c of the case 6, and is supplied to the cancel oil chamber 47 via an oil passage (not shown) in the rotor hub 42. Once the cancel oil chamber 47 is filled with the lubricating oil, the lubricating oil overflowing from the cancel oil chamber 47 is guided toward the inner peripheries of the friction plates 41 from between the distal end on the front side of the rotor hub 42 and the connecting member 52, and is supplied to the friction plates 41 by a centrifugal force. The lubricating oil thus supplied to the friction plates 41 is discharged to the outer peripheral side of the drum member 49 and guided to the splines 42Bs of the cylindrical portion 42B of the rotor hub 42, and its flow toward the front side is blocked by the snap ring SN1. The lubricating oil is thus discharged toward the rear side from a hole (not shown) formed in the cylinder member 42A of the rotor hub 42 and returned to an oil pan (not shown).

Lubricating oil for the clutch K0 is supplied from the hydraulic control device, not shown, to an oil passage (not shown) in the boss portion 6c of the case 6, and is supplied to the cancel oil chamber 37 through oil passages a1, a2, and a3 in the input shaft 50a and an oil passage a4 in the input shaft 1a. Once the cancel oil chamber 37 is filled with the lubricating oil, the lubricating oil overflowing from the cancel oil chamber 37 is guided into between the cancel plate 34 and the end plate 39, and is supplied to the friction plates 31 by a centrifugal force. The lubricating oil thus supplied to the friction plates 31 is discharged to the splines 42Bs of the cylindrical portion 42B of the rotor hub 42, and is introduced into the plurality of circumferential holes 42Ba formed at circumferential positions of different phases in the cylindrical portion 42B so as to extend in the inner periphery-outer periphery direction from the inner peripheral surface to the outer peripheral surface of the cylindrical portion 42B. Each circumferential hole 42Ba is formed at such a position that the distance from the center of the circumferential hole 42Ba to the end on the front side (one side) in the axial direction of the rotor 20 is shorter than the distance from the center of the circumferential hole 42Ba to the end on the rear side (other side) in the axial direction of the rotor 20. In other words, in the present embodiment, the circumferential holes 42Ba in the cylindrical portion 42B of the rotor hub 42 are not formed in the middle in the axial direction with respect to the rotor 20.

### [Coil Temperature Calculation Function]

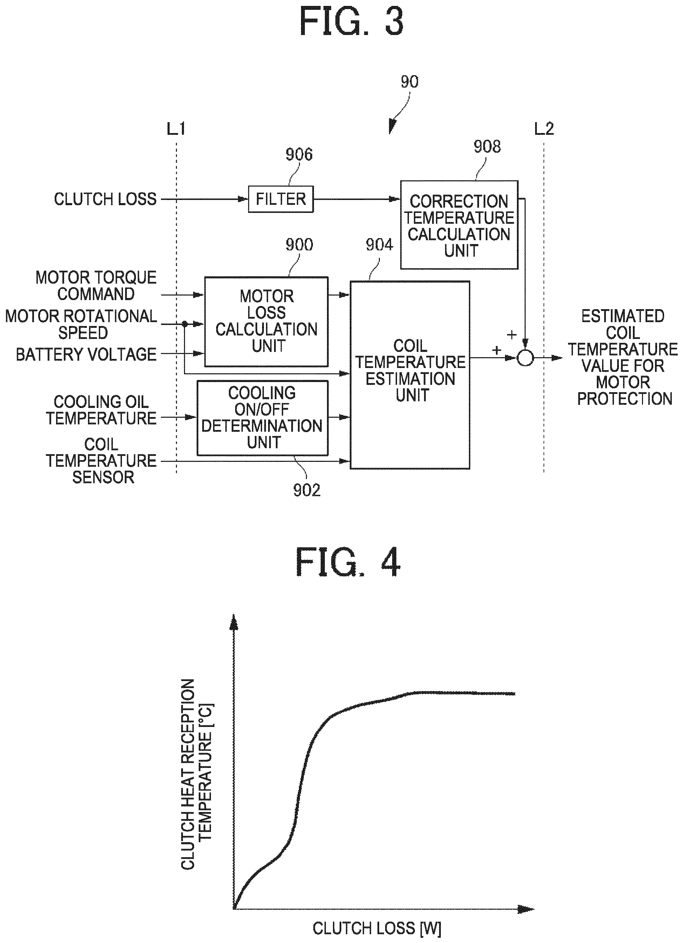

Next, a processing device having a coil temperature calculation function suitable for the hybrid drive device 1 described above will be described with reference to FIG. 3 and the subsequent figures.

The coil temperature calculation function described below is suitable for the hybrid drive device 1 described above. The detailed configuration of the hybrid drive device 1 may be different from the configuration described above, and the coil temperature calculation function is also applicable to various drive devices other than the hybrid drive device 1. For example, the coil temperature calculation function described below is also applicable to a drive device for a system that does not include an engine. Specifically, the coil temperature calculation function described below is applicable to any drive device in which a rotating electrical machine is disposed radially outward of a power transmission mechanism in the case 6. In this case, the power transmission mechanism may not be a mechanism that transmits power from a power source (e.g., the motor 3) to the wheels, and may be a mechanism that transmits power to a different object to be driven.

FIG. 3 is a block diagram showing an example of a processing device 90 that implements the coil temperature calculation function. The processing device 90 may be implemented by a processing device that controls the motor 3 described above. The processing device 90 may be implemented by a computer such as, for example, a microcomputer. In FIG. 3, the left side of line L1 represents inputs to the processing device 90, the right side of line L2 represents an output from the processing device 90, and the configuration between line L1 and line L2 is implemented by the processing device 90.

As shown in FIG. 3, the processing device 90 includes a motor loss calculation unit 900, a cooling ON/OFF determination unit 902, a coil temperature estimation unit 904, a filter 906, and a correction temperature calculation unit 908.

The motor loss calculation unit 900 calculates loss in the motor 3 based on a motor torque command, a motor rotational speed, and a battery voltage. The motor torque command may be a command value from an upper-level electronic control unit (ECU). The motor rotational speed and the battery voltage may be sensor information. The battery voltage is the voltage of a high-voltage battery that supplies power to the motor 3. Any method can be used to calculate motor loss based on these parameters, and a widely known method may be used.

The cooling ON/OFF determination unit 902 determines whether oil is being supplied to the stator coil 12 based on temperature information of cooling oil (shown as "cooling oil temperature" in FIG. 3). The cooling oil temperature may be a value based on the sensor information. For example, the cooling ON/OFF determination unit 902 may determine that oil is not being supplied to the stator coil 12 when the cooling oil temperature is relatively low. Alternatively, the cooling ON/OFF determination unit 902 may determine whether oil is being supplied to the stator coil 12 based on operation information of the oil pump (not shown).

The coil temperature estimation unit 904 estimates the temperature of the stator coil 12 based on the calculated loss value from the motor loss calculation unit 900, the determination result from the cooling ON/OFF determination unit 902, and the sensor information from a coil temperature sensor (shown by "coil temperature sensor" in FIG. 3). The temperature of the stator coil 12 may vary depending on the position (part) of the stator coil 12. In the present embodiment, the coil temperature estimation unit 904 estimates the temperature of a highest temperature part of the stator coil 12 (that is, the highest temperature in the stator coil 12 at that point in time). In this case, for example, even when the coil temperature sensor cannot be mounted on the highest temperature part of the stator coil 12 due to layout constraints, or even when the influence of a time constant for the coil temperature sensor is relatively great, the highest temperature in the stator coil 12 can be relatively accurately estimated. Such estimation of the highest temperature in the stator coil 12 is useful from the viewpoint of protecting the stator coil 12. For example, the coil temperature sensor may be in the form of a thermistor.

The coil temperature estimation unit 904 may change the constant of an expression for estimating the temperature of the stator coil 12, based on the determination result from the cooling ON/OFF determination unit 902. For example, when oil is supplied to the stator coil 12, the constant may be adapted so that the temperature of the stator coil 12 is estimated to be lower than when oil is not supplied to the stator coil 12. Alternatively, different maps may be used depending on whether oil is supplied to the stator coil 12 or oil is not supplied to the stator coil 12.

Although the temperature of the stator coil 12 estimated by the coil temperature estimation unit 904 has a certain degree of accuracy as a base value of the temperature of the stator coil 12, the influence of heat received from oil that gets hot due to the loss in the clutch WSC is not reflected in this temperature of the stator coil 12.

In other words, oil flowing through the clutch WSC is returned to the oil pan (not shown) as described above, but part of the oil takes such a path that the oil hits the second coil end 12Eb before reaching the oil pan. In this case, oil that has gotten hot as a result of lubrication when the clutch WSC slips at the time the vehicle starts moving etc. hits the second coil end 12Eb. When part of oil supplied to the clutch WSC and having gotten hot thus hits the second coil end 12Eb (see arrow R1 in FIG. 2), the temperature of the second coil end 12Eb increases. As described above, in the present embodiment, the second coil end 12Eb is disposed at such a position that oil supplied to the clutch WSC hits the second coil end 12Eb. Therefore, the second coil end 12Eb tends to get hot due to the heat received from the oil supplied to the clutch WSC and having gotten hot.

Therefore, in the present embodiment, the processing device 90 includes the correction temperature calculation unit 908 as a configuration for reflecting the influence of such heat reception in the calculated value of the temperature of the stator coil 12.

Based on clutch loss input via the filter 906, the correction temperature calculation unit 908 derives an increase in temperature of the stator coil 12 due to the clutch loss as an addition value (correction value). The filter 906 is a filter for reducing noise of the input (clutch loss), and may be, for example, a low-pass filter.

The clutch loss is loss in the clutch WSC, and may be, for example, slip loss in the clutch WSC. In this case, the slip loss may be calculated as slip loss = transmitted torque × differential rotation × 2π × 1/60. In this case, the transmitted torque may be a value based on a command value, and is a sum of the motor 3 and the engine 2. The differential rotation is the difference between the rotational speed of the rotor 20 and the rotational speed of the input shaft 50a, and may be a value based on sensor information from rotation angle sensors for the rotor 20 and the input shaft 50a.

The loss in the clutch WSC first makes oil flowing through the clutch WSC get hot. That is, the oil flowing through the clutch WSC gets hot as it receives heat from the clutch WSC. The stator coil 12 then receives heat from this hot oil, so that the stator coil 12 gets hot. The temperature of the second coil end 12Eb that increases due to the heat received from such hot oil (hereinafter also referred to as "clutch heat reception temperature") tends to be higher as the clutch loss increases.

Therefore, in the present embodiment, the correction temperature calculation unit 908 calculates the correction temperature in such a manner that the greater the clutch loss, the higher the calculated value of the temperature of the stator coil 12. Specifically, the correction temperature calculation unit 908 uses such a map as shown in FIG. 4 to calculate the clutch heat reception temperature as the correction temperature. In this case, the relationship between the clutch loss and the clutch heat reception temperature is defined in such a manner that the clutch heat reception temperature increases nonlinearly as the clutch loss increases. The relationship between the clutch loss and the clutch heat reception temperature (correction temperature) may be adapted using tests, analyses, etc.

The correction temperature thus calculated by the correction temperature calculation unit 908 is added to the temperature of the stator coil 12 calculated by the coil temperature estimation unit 904 as described above, and the sum thus obtained is output as a final temperature of the stator coil 12 (hereinafter also referred to as "estimated coil temperature value for motor protection).

Since the loss in the clutch WSC includes the slip loss, the loss in the clutch WSC has a relatively large value (e.g., significantly larger than loss in the clutch K0). Therefore, the clutch heat reception temperature tends to be a relatively large value.

Therefore, if the temperature of the stator coil 12 calculated by the coil temperature estimation unit 904 as described above is output as the final temperature of the stator coil 12 (estimated coil temperature value for motor protection) without adding the correction temperature calculated by the correction temperature calculation unit 908, an error of the estimated coil temperature value for motor protection is relatively large.

**In** this regard, according to the present embodiment, the correction temperature calculation unit 908 is provided, so that the clutch heat reception temperature can be added to calculate the estimated coil temperature for motor protection, as described above. In other words, according to the present embodiment, the influence of heat received by the stator coil 12 (particularly the second coil end 12Eb) from oil that has gotten hot due to the loss in the clutch WSC is considered as described above. This can effectively increase the accuracy of the estimated coil temperature value for motor protection (accuracy for the actual temperature of the highest temperature part of the stator coil 12).

The estimated coil temperature value for motor protection represents the temperature of the highest temperature part of the stator coil 12 (e.g., a part in the second coil end 12Eb) at that point in time. Therefore, the estimated coil temperature value for motor protection can be effectively used to protect the motor 3. For example, when the estimated coil temperature value for motor protection becomes higher than a threshold, the operation of the motor 3 is limited. This can appropriately prevent the possibility of the temperature of the stator coil 12 becoming excessively high. According to the present embodiment, as the accuracy of the estimated coil temperature value for motor protection is increased, protection of the motor 3 can be started or ended at an appropriate stage according to the temperature of the stator coil 12, so that the motor 3 can be efficiently operated.

In the present embodiment, the coil temperature estimation unit 904 performs a calculation process separately from the correction temperature calculation unit 908. Therefore, calculation in consideration of the difference between individual time constants (e.g., a time constant for an increase in clutch heat reception temperature with an increase in clutch loss is significantly larger than a time constant for an increase in temperature of the stator coil 12 with an increase in motor loss etc.) can be implemented. However, the coil temperature estimation unit 904 may have the function of the correction temperature calculation unit 908. In other words, the coil temperature estimation unit 904 may derive the estimated coil temperature value for motor protection based on the calculated loss value from the motor loss calculation unit 900, the determination result from the cooling ON/OFF determination unit 902, the sensor information from the coil temperature sensor (not shown), and the clutch loss.

The coil temperature estimation unit 904 may estimate the temperature of the stator coil 12 using machine learning results. For example, when using artificial intelligence, this can be achieved by implementing a convolutional neural network obtained by machine learning. In machine learning, for example, such weights of a convolutional neural network that minimize an error of the estimated coil temperature value for motor protection (error from an actual temperature) may be learned using actual data of various types of input information (motor loss, motor rotational speed, sensor information from the coil temperature sensor, and clutch loss).

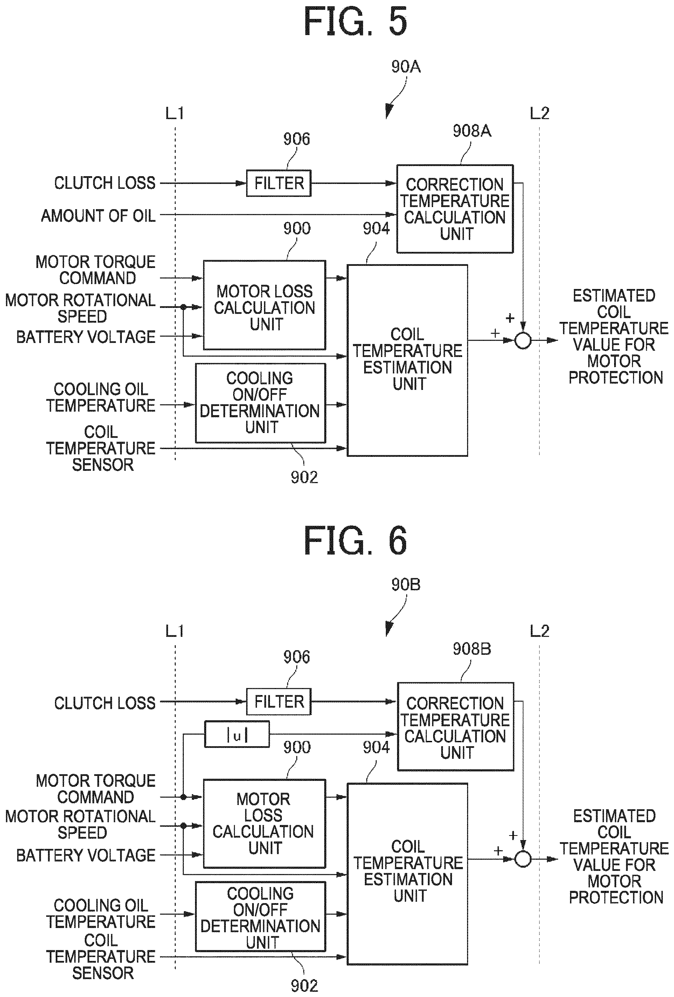

Next, modifications of the coil temperature calculation function will be described with reference to FIGS. 5 and 6.

FIG. 5 is a block diagram showing an example of a processing device 90A that implements a coil temperature calculation function according to a first modification.

The processing device 90A shown in FIG. 5 is different from the processing device 90 shown in FIG. 3 in that the correction temperature calculation unit 908 is replaced with a correction temperature calculation unit 908A.

Based on loss in the clutch WSC and the amount of oil supplied to the clutch WSC, the correction temperature calculation unit 908A derives an increase in temperature of the stator coil 12 due to the clutch loss as an addition value (correction value).

The larger the amount of oil supplied to the clutch WSC, the more an increase in temperature of the stator coil 12 due to the clutch loss tends to be larger. This is because the larger the amount of oil supplied to the clutch WSC, the more heat reception of oil due to the clutch loss tends to be facilitated.

Therefore, in this modification, the correction temperature calculation unit 908A may calculate the correction temperature in such a manner that the larger the clutch loss, the larger the calculated value of the temperature of the stator coil 12, and that the larger the amount of oil supplied to the clutch WSC, the larger the calculated value of the temperature of the stator coil 12. The relationship between both the amount of oil supplied to the clutch WSC and the clutch loss and the clutch heat reception temperature (correction temperature) may be adapted using tests, analyses, etc.

As described above, according to the present embodiment, the estimated coil temperature value for motor protection can be derived by considering not only the clutch loss but also the amount of oil supplied to the clutch WSC. This can further increase the accuracy of the estimated coil temperature value for motor protection.

FIG. 6 is a block diagram showing an example of a processing device 90B that implements a coil temperature calculation function according to a second modification.

The processing device 90B shown in FIG. 6 is different from the processing device 90 shown in FIG. 3 in that the correction temperature calculation unit 908 is replaced with a correction temperature calculation unit 908B.

Based on loss in the clutch WSC and a motor torque command, the correction temperature calculation unit 908B derives an increase in temperature of the stator coil 12 due to the clutch loss as an addition value (correction value). In the example shown in FIG. 6, the motor torque command is converted to an absolute value and input to the correction temperature calculation unit 908B.

When the motor torque command is relatively large, an increase in temperature of the stator coil 12 due to the motor loss is significant, so that the influence of an increase in temperature of the stator coil 12 due to clutch loss may decrease accordingly.

Therefore, in this modification, the correction temperature calculation unit 908B may calculate the correction temperature in such a manner that, under the condition that the clutch loss is the same, the larger the absolute value of the motor torque command, the lower the correction temperature. The relationship between both the absolute value of the motor torque command and the clutch loss and the clutch heat reception temperature (correction temperature) may be adapted using tests, analyses, etc.

As described above, according to the present embodiment, the estimated coil temperature value for motor protection can be derived by considering not only the clutch loss but also the magnitude of the motor torque command. This can further increase the accuracy of the estimated coil temperature value for motor protection.

Although the embodiments are described in detail above, the present disclosure is not limited to the specific embodiments, and various modifications and changes can be made within the scope of the claims.

For example, in the above embodiment, the correction temperature calculation unit 908 calculates the correction temperature based on loss in the clutch WSC. However, the correction temperature calculation unit 908 may calculate the correction temperature based on not only the loss in the clutch WSC but also loss in any other mechanism of the power transmission mechanism. For example, the correction temperature calculation unit 908 may calculate the sum of a first correction temperature calculated based on the loss in the clutch WSC and a second correction temperature calculated based on the loss in the clutch K0 as the correction temperature (temperature to be added to the temperature of the stator coil 12 calculated by the coil temperature estimation unit 904).

### Description of the Reference Numerals

1 ... hybrid drive device (vehicle drive device), 3 ... motor (rotating electrical machine), 6 ... case, WSC ... clutch, 12 ... stator coil, 12Eb ... coil end (axial end), 50 ... speed change mechanism, 90, 90A, 90B ... processing device, 904 ... coil temperature estimation unit (base value calculation unit), 908, 908A, 908B ... correction temperature calculation unit (addition value calculation unit)

## Claims

1. A vehicle drive device (1), comprising:
a case (6);
a power transmission mechanism disposed in the case (6) and configured to be supplied with oil; and
a rotating electrical machine (3) disposed radially outward of the power transmission mechanism in the case (6) and including a stator coil (12) at such a position that the oil supplied to the power transmission mechanism hits the stator coil (12);
**characterized by**
a coil temperature sensor; and
a processing device (90, 90A, 90B) configured to calculate a temperature of the stator coil (12) based on a sensor information from the coil temperature sensor and loss in the rotating electrical machine (3) and loss in the power transmission mechanism.

2. The vehicle drive device (1) according to claim 1, wherein the processing device (90, 90A, 90B) calculates the temperature of the stator coil (12) in such a manner that a calculated value of the temperature of the stator coil (12) increases as the loss in the power transmission mechanism increases.

3. The vehicle drive device (1) according to claim 1 or 2, wherein the processing device (90A) calculates the temperature of the stator coil (12) based further on a flow rate of the oil supplied to the power transmission mechanism.

4. The vehicle drive device (1) according to any one of claims 1 to 3, wherein the processing device (90, 90A, 90B) includes
a base value calculation unit (904) configured to derive a base value of the temperature of the stator coil (12) based on the loss in the rotating electrical machine (3), and
an addition value calculation unit (908, 908A, 908B) configured to derive an addition value for the temperature of the stator coil (12) based on the loss in the power transmission mechanism, the additional value being a value to be added to the base value derived by the base value calculation unit.

5. The vehicle drive device (1) according to any one of claims 1 to 4, wherein the power transmission mechanism includes a clutch (K0) provided between a speed change mechanism (50) and the rotating electrical machine (3).

6. The vehicle drive device (1) according to any one of claims 1 to 4, wherein the loss in the power transmission mechanism includes loss in a clutch (K0).

7. The vehicle drive device (1) according to claim 5 or 6, wherein the oil supplied to the power transmission mechanism is discharged through the clutch (K0) toward an axial end of the stator coil (12).

## Patentansprüche

1. Fahrzeugantriebsvorrichtung (1), Folgendes umfassend:
ein Gehäuse (6);
einen im Gehäuse (6) angeordneten Kraftübertragungsmechanismus, der ausgelegt ist, um mit Öl versorgt zu werden; und
eine rotierende elektrische Maschine (3), die radial außerhalb des Kraftübertragungsmechanismus im Gehäuse (6) angeordnet ist und eine Statorwicklung (12) an einer solchen Position aufweist, an der das dem Kraftübertragungsmechanismus zugeführte Öl auf die Statorwicklung (12) trifft;
**gekennzeichnet durch**
einen Spulentemperatursensor; und
eine Verarbeitungsvorrichtung (90, 90A, 90B), die ausgelegt ist, um eine Temperatur der Statorspule (12) auf der Grundlage von Sensorinformationen des Spulentemperatursensors sowie der Verluste in der rotierenden elektrischen Maschine (3) und der Verluste im Kraftübertragungsmechanismus zu berechnen.

2. Fahrzeugantriebsvorrichtung (1) nach Anspruch 1, wobei die Verarbeitungsvorrichtung (90, 90A, 90B) die Temperatur der Statorspule (12) derart berechnet, dass ein berechneter Wert der Temperatur der Statorspule (12) mit zunehmendem Verlust im Kraftübertragungsmechanismus ansteigt.

3. Fahrzeugantriebsvorrichtung (1) nach Anspruch 1 oder 2, wobei die Verarbeitungsvorrichtung (90A) die Temperatur der Statorwicklung (12) zusätzlich auf der Grundlage einer Durchflussrate des dem Kraftübertragungsmechanismus zugeführten Öls berechnet.

4. Fahrzeugantriebsvorrichtung (1) nach einem der Ansprüche 1 bis 3, wobei die Verarbeitungsvorrichtung (90, 90A, 90B) Folgendes aufweist:
eine Basiswert-Berechnungseinheit (904), die ausgelegt ist, um einen Basiswert der Temperatur der Statorspule (12) auf der Grundlage der Verluste in der rotierenden elektrischen Maschine (3) abzuleiten, und
eine Additionswert-Berechnungseinheit (908, 908A, 908B), die konfiguriert ist, um einen Additionswert für die Temperatur der Statorspule (12) auf der Grundlage der Verluste im Kraftübertragungsmechanismus abzuleiten, wobei der Additionswert ein Wert ist, der zu dem von der Basiswert-Berechnungseinheit abgeleiteten Basiswert hinzuzufügen ist.

5. Fahrzeugantriebsvorrichtung (1) nach einem der Ansprüche 1 bis 4, wobei der Kraftübertragungsmechanismus eine Kupplung (K0) aufweist, die zwischen einem Gangwechselmechanismus (50) und der rotierenden elektrischen Maschine (3) vorgesehen ist.

6. Fahrzeugantriebsvorrichtung (1) nach einem der Ansprüche 1 bis 4, wobei der Verlust im Kraftübertragungsmechanismus den Verlust in einer Kupplung (K0) umfasst.

7. Fahrzeugantriebsvorrichtung (1) nach Anspruch 5 oder 6, wobei das dem Kraftübertragungsmechanismus zugeführte Öl durch die Kupplung (K0) zu einem axialen Ende der Statorspule (12) hin abgeleitet wird.

## Revendications

1. Dispositif d'entraînement de véhicule (1), comprenant :
un boîtier (6) ;
un mécanisme de transmission de puissance disposé dans le boîtier (6) et conçu pour être alimenté en huile ; et
une machine électrique tournante (3) disposée radialement à l'extérieur du mécanisme de transmission de puissance dans le boîtier (6) et comportant une bobine de stator (12) placée à une position où l'huile fournie au mécanisme de transmission de puissance vienne en contact avec la bobine de stator (12) ;
**caractérisé par**
un capteur de température de bobine ; et
un dispositif de traitement (90, 90A, 90B) configuré pour calculer une température de la bobine de stator (12) sur la base d'informations fournies par le capteur de température de bobine, ainsi que des pertes dans la machine électrique tournante (3) et des pertes dans le mécanisme de transmission de puissance.

2. Dispositif d'entraînement de véhicule (1) selon la revendication 1, dans lequel le dispositif de traitement (90, 90A, 90B) calcule la température de la bobine de stator (12) de telle sorte qu'une valeur calculée de la température de la bobine de stator (12) augmente à mesure que les pertes dans le mécanisme de transmission de puissance augmentent.

3. Dispositif d'entraînement de véhicule (1) selon la revendication 1 ou 2, dans lequel le dispositif de traitement (90A) calcule la température de la bobine de stator (12) en se basant en outre sur un débit d'huile fournie au mécanisme de transmission de puissance.

4. Dispositif d'entraînement de véhicule (1) selon l'une quelconque des revendications 1 à 3, dans lequel le dispositif de traitement (90, 90A, 90B) comporte
une unité de calcul de valeur de base (904) configurée pour déterminer une valeur de base de la température de la bobine de stator (12) en fonction des pertes dans la machine électrique tournante (3), et
une unité de calcul de valeur d'ajout (908, 908A, 908B) configurée pour déterminer une valeur d'ajout relative à la température de la bobine de stator (12) en fonction des pertes dans le mécanisme de transmission de puissance, ladite valeur d'ajout étant une valeur à ajouter à la valeur de base déterminée par l'unité de calcul de valeur de base.

5. Dispositif d'entraînement de véhicule (1) selon l'une quelconque des revendications 1 à 4, dans lequel le mécanisme de transmission de puissance comporte un embrayage (K0) prévu entre un mécanisme de changement de vitesse (50) et la machine électrique tournante (3).

6. Dispositif d'entraînement de véhicule (1) selon l'une quelconque des revendications 1 à 4, dans lequel les pertes au niveau du mécanisme de transmission de puissance comprennent les pertes au niveau d'un embrayage (K0).

7. Dispositif d'entraînement de véhicule (1) selon la revendication 5 ou 6, dans lequel l'huile fournie au mécanisme de transmission de puissance est évacuée à travers l'embrayage (K0) vers une extrémité axiale de la bobine de stator (12).
